# EUROPEAN PATENT APPLICATION

(11) **EP 4 672 561 A1**
(43) Date of publication of application: **31.12.2025**
(21) Application number: 23924047.6
(22) Date of filing: 22.02.2023
(51) Int. Cl.: H02K 1/30

(54) **MOTOR DEVICE**

(71) Applicant: JTEKT Corporation, Kariya-shi, Aichi 448-8652 (JP)
(72) Inventor: FURUSE Takehiro, Kariya-shi, Aichi 448-8652 (JP)
(74) Representative: Winter, Brandl - Partnerschaft mbB
(86) International application number: PCT/JP2023/006488
(87) International publication number: WO 2024/176394

(57) **Abstract**

A motor device (31) includes a motor (40), a first circuit board (51), and a second circuit board (52). The motor includes a motor case (41) and an end wall (42) attached to an axial end of the motor case. The first circuit board includes a low heat-generating element (61A, 61B), and is disposed so as to face a portion of the end wall in an axial direction of the motor. The second circuit board includes a high heat-generating element (75A, 75B, 84A, 84B, 81A1, 81B1), and is disposed on the opposite side of the first circuit board from the end wall in the axial direction of the motor. The second circuit board includes a first portion (52A) facing the first circuit board, and a second portion (52B) facing the end wall. Thermal resistance between the second portion and the end wall is smaller than thermal resistance between the first circuit board and the end wall.

## Description

### TECHNICAL FIELD

The present disclosure relates to motor devices.

### BACKGROUND ART

Conventionally, there are motor devices in which a motor and a control device are integrally provided. For example, the motor device disclosed in Patent Document 1 includes a motor and an ECU. The ECU is attached to a heat sink provided at an axial end of the motor. The ECU includes a connector unit, a main circuit board, a sub-circuit board, and connecting components. The connector unit includes connectors used for connection to the outside. The connector unit is mounted spaced apart from the heat sink in the axial direction. The main circuit board is fixed to an axial end face of the heat sink. The sub-circuit board is fixed to the connector unit. The main circuit board and the sub-circuit board face each other in the axial direction. The main circuit board and the sub-circuit board are connected to each other via the connecting components.

### Related Art Documents

### Patent Documents

Patent Document 1: Japanese Unexamined Patent Application Publication No. 2022-144197 (JP 2022-144197 A)

### SUMMARY OF THE INVENTION

### Problem to be Solved by the Invention

There is the following concern about the motor device of Patent Document 1. For example, it is necessary to secure the volume of the heat sink according to the amount of heat generated by electronic components provided on the circuit board. This may increase the size of the motor device, particularly the axial size of the motor device.

### Means for Solving the Problem

A motor device according to one aspect of the present disclosure includes a motor, a first circuit board, and a second circuit board. The motor includes a motor case made of metal, and an end wall made of metal and attached to an axial end of the motor case. The first circuit board includes a low heat-generating element, and is disposed so as to face a portion of the end wall in an axial direction of the motor. The first circuit board is configured to control power supply to the motor. The second circuit board includes a high heat-generating element configured to generate more heat than the low heat-generating element. The second circuit board is disposed on the opposite side of the first circuit board from the end wall in the axial direction of the motor. The second circuit board is configured to supply electric power to the motor under the control of the first circuit board. The second circuit board includes a first portion facing the first circuit board, and a second portion facing the end wall. Thermal resistance between the second portion and the end wall is smaller than thermal resistance between the first circuit board and the end wall.

### BRIEF DESCRIPTION OF THE DRAWINGS

[FIG. 1] FIG. 1 is a configuration diagram of a steering operation mechanism according to an embodiment of a motor device.
[FIG. 2] FIG. 2 is an exploded perspective view of the motor device in FIG. 1.
[FIG. 3] FIG. 3 is a top view showing a first surface of a control board in FIG. 2.
[FIG. 4] FIG. 4 is a bottom view showing a second surface of the control board in FIG. 2.
[FIG. 5] FIG. 5 is a top view showing a first surface of a power board in FIG. 2.
[FIG. 6] FIG. 6 is a bottom view showing a second surface of the power board in FIG. 2.
[FIG. 7] FIG. 7 is a sectional view showing a main part of the motor device in FIG. 1.

### MODES FOR CARRYING OUT THE INVENTION

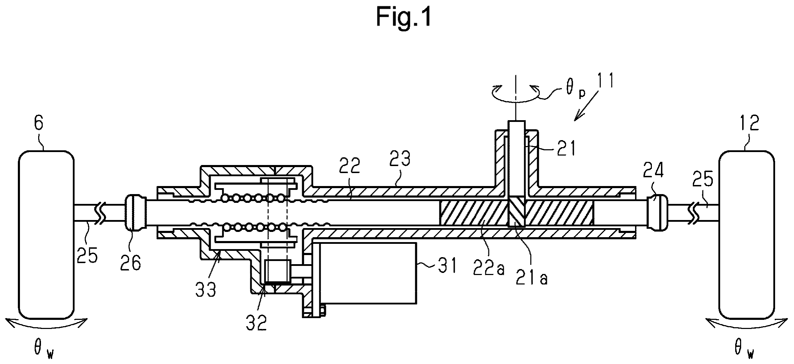

A motor device according to an embodiment will be described. The motor device is mounted on, for example, a steering system of a vehicle. As shown in FIG. 1, the steering system of the vehicle includes a steering operation mechanism 11. The steering operation mechanism 11 is a mechanism part that steers steered wheels 12 of the vehicle according to steering of a steering wheel.

The steering operation mechanism 11 includes a pinion shaft 21, a steered shaft 22, and a housing 23. The housing 23 rotatably supports the pinion shaft 21. The housing 23 also houses the steered shaft 22 such that the steered shaft 22 can reciprocate in an axial direction. The pinion shaft 21 is provided so as to intersect the steered shaft 22. Pinion teeth 21a of the pinion shaft 21 mesh with rack teeth 22a of the steered shaft 22. Both ends of the steered shaft 22 are connected to the steered wheels 12 via rack ends 24 and tie rods 25.

The steering system is a steer-by-wire steering system or an electric power steering system. When the steering system is a steer-by-wire steering system, the pinion shaft 21 is not mechanically connected to the steering wheel. When the steering system is an electric power steering system, the pinion shaft 21 is mechanically connected to the steering wheel via a steering shaft.

The steering operation mechanism 11 includes a motor device 31, a transmission mechanism 32, and a conversion mechanism 33. The motor device 31 is a source of a steering force to be applied to the steered shaft 22. The steering force is a force for steering the steered wheels 12. The transmission mechanism 32 is, for example, a belt transmission mechanism. The transmission mechanism 32 transmits rotation of the motor 31 to the conversion mechanism 33. The conversion mechanism 33 is, for example, a ball screw mechanism. The conversion mechanism 33 converts the rotation transmitted via the transmission mechanism 32 to axial motion of the steered shaft 22. The steered angle θ_{w} of the steered wheels 12 is changed as the steered shaft 22 moves in the axial direction. The steered shaft 22 is a shaft to be driven by the motor device 31.

When the steering system is a steer-by-wire steering system, the motor device 31 functions as a steering motor. The steering motor generates a steering force that is a force for steering the steered wheels 12. When the steering system is an electric power steering system, the motor device 31 functions as an assist motor. The assist motor generates an assist force that is a force for assisting in operating the steering wheel.

### <Configuration of Motor Device 31>

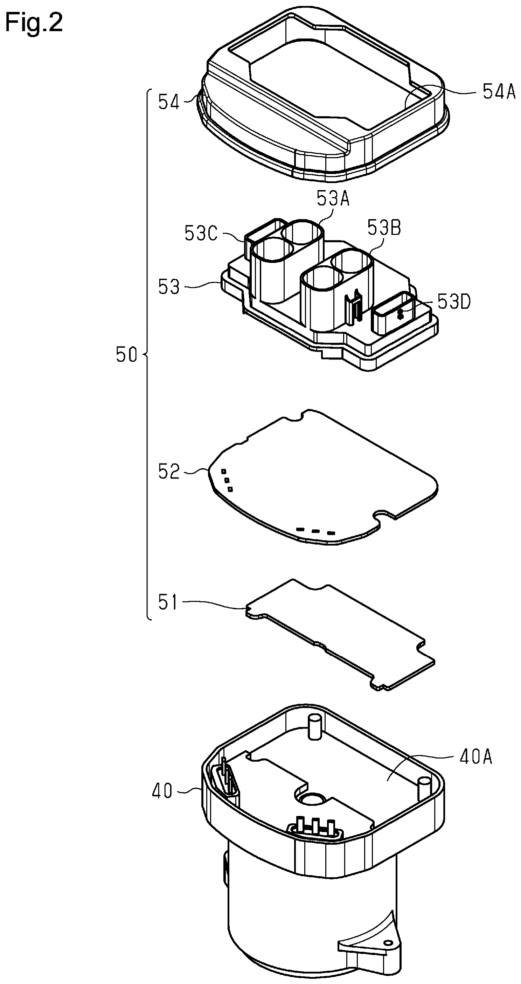

Next, the configuration of the motor device 31 will be described. As shown in FIG. 2, the motor device 31 includes a motor 40 and a control device 50. The motor 40 is, for example, a three-phase brushless motor. The motor 40 includes, for example, two winding groups. The control device 50 is attached to an axial end of the motor 40. The control device 50 independently controls power supply to the two winding groups.

The control device 50 includes a control board 51, a power board 52, a connector assembly 53, and a cover 53. The control board 51 includes electronic components for controlling power supply to the motor 40. The power board 52 includes electronic components for supplying electric power to the motor 40 through control by the control board 51. The axial end of the motor 40 includes a board housing portion 40A. The control board 51 is housed inside the board housing portion 40A. The power board 52 is attached to the axial end of the motor 40 so as to cover the control board 51. The power board 52 is disposed at a position farther from the motor 40 than the control board 51 in the axial direction of the motor 40. The control board 51 is a first circuit board of the motor device 31. The power board 52 is a second circuit board of the motor device 31.

The connector assembly 53 is made of synthetic resin. The connector assembly 53 includes a first power connector 53A and a second power connector 53B. The first power connector 53A extends in the opposite direction from the motor 40 and is open in the opposite direction from the motor 40. The first power connector 53A includes a power terminal and a ground terminal. A power plug that is a mating component is mated with the first power connector 53A. The power plug is provided at a first end of a power line. A second end of the power line is connected to a direct current power supply such as an in-vehicle battery. Electric power from the direct current power supply is supplied to the control board 51 and the power board 52 via the power terminal and the ground terminal. The second power connector 53B has the same configuration as the first power connector 53A. The direct current power supply is equivalent to an external power supply.

The connector assembly 53 includes a first signal connector 53C and a second signal connector 53D. The first signal connector 53C extends in the opposite direction from the motor 40. The first signal connector 53C includes a signal terminal. A signal plug that is a mating component is mated with the first signal connector 53C. The signal plug is provided at a first end of a signal line. A second end of the signal line is connected to a vehicle control device. The control board 51 and the vehicle control device send and receive signals to and from each other via the signal terminal. The second signal connector 53D has the same configuration as the first signal connector 53C.

The cover 54 is made of synthetic resin. The cover 54 is a box-shaped member that is open toward the motor 40. An end wall of the cover 54 has a fitting hole 54A. The outer peripheral portion of the connector assembly 53 is fitted in the fitting hole 54A. Each connector (53A, 53B, 53C, 54C) of the connector assembly 53 passes through the fitting hole 54A and protrudes beyond the end wall of the cover 54 to the outside of the cover 53. The cover 54 is attached to the axial end of the motor 40. The cover 54 together with the connector assembly 53 covers the end of the motor 40.

### <Control Board 51>

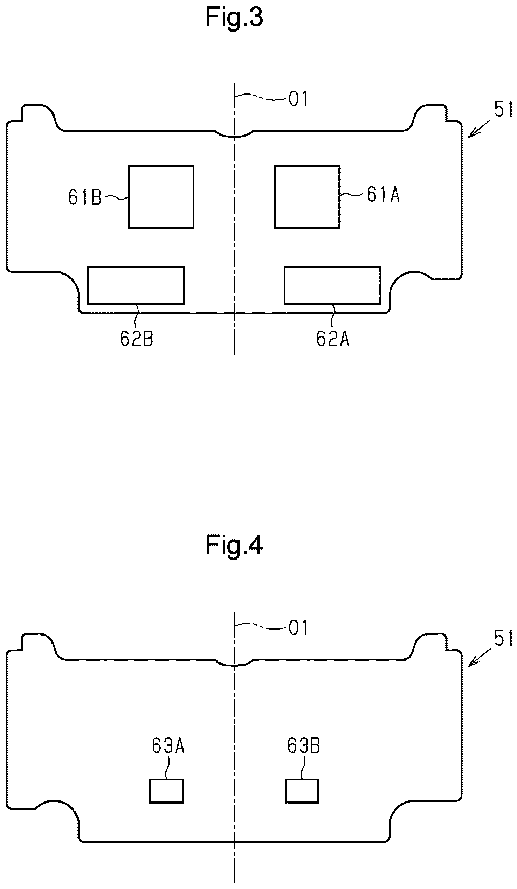

As shown in FIG. 3, the control board 51 has the shape of, for example, a rectangular flat plate. The control board 51 includes a first surface and a second surface that are located on opposite sides. The first surface is the surface of the control board 51 that is located on the opposite side from the power board 52 when the motor device 31 is assembled. The second surface is the surface of the control board 51 that faces the power board 52 when the motor device 31 is assembled.

The first surface of the control board 51 includes a first microcomputer 61A and a second microcomputer 61B. The first microcomputer 61A and the second microcomputer 61B are arranged symmetrically with respect to a first center line O1. The first center line O1 is, for example, a straight line passing through the center of the control board 51 when viewed from a direction perpendicular to the control board 51. The first surface includes a first inter-board connector 62A and a second inter-board connector 62B. The first inter-board connector 62A and the second inter-board connector 62B are arranged symmetrically with respect to the first center line O1.

As shown in FIG. 4, the second surface of the control board 51 includes a first ground connection member 63A and a second ground connection member 63B. The first ground connection member 63A and the second ground connection member 63B are arranged symmetrically with respect to the first center line O1. The first ground connection member 63A is disposed, for example, at or near a position corresponding to the first inter-board connector 62A. The second ground connection member 63B is disposed, for example, at or near a position corresponding to the second inter-board connector 62B. Each of the first ground connection member 63A and the second ground connection member 63B is an elastic member made of metal, and is elastic in a direction perpendicular to the control board 51. The metal is, for example, copper, and is electrically conductive.

### <Power Board 52>

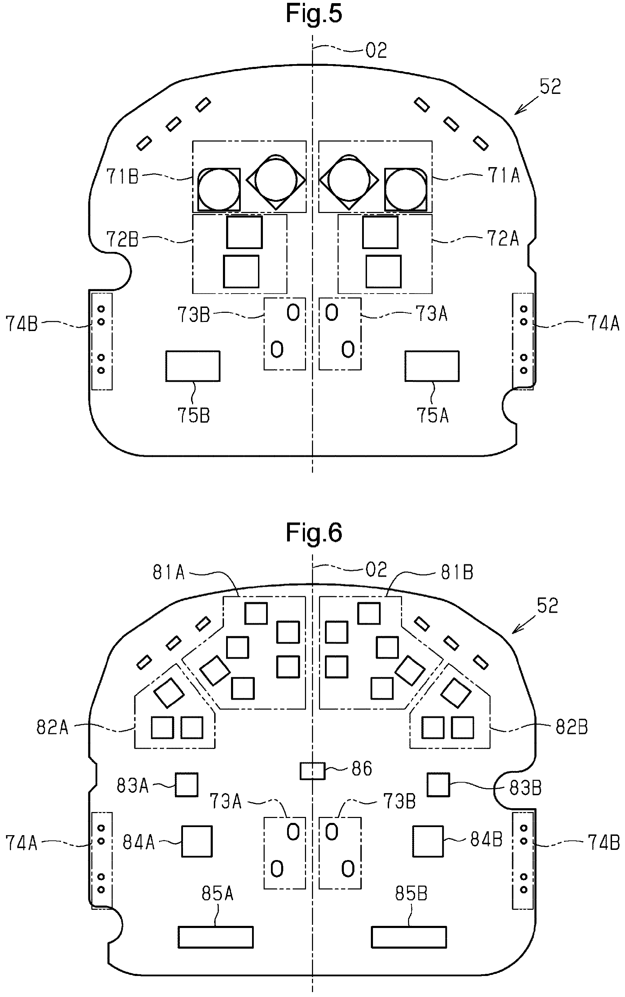

As shown in FIG. 5, the power board 52 has the shape of, for example, a flat plate. The power board 52 includes a first surface and a second surface that are located on opposite sides. The first surface is the surface of the power board 52 that is located on the opposite side from the control board 51 when the motor device 31 is assembled. The second surface is the surface of the power board 52 that faces the control board 51 when the motor device 31 is assembled.

The first surface of the power board 52 includes a first ripple capacitor 71A and a second ripple capacitor 71B. The first ripple capacitor 71A and the second ripple capacitor 71B are arranged symmetrically with respect to a second center line O2. The second center line O2 is, for example, a straight line passing through the center of the power board 52 when viewed from a direction perpendicular to the power board 52. The second center line O2 coincides with the first center line O1 of the control board 51 when viewed from a direction perpendicular to the power board 52.

The first surface of the power board 52 includes a first power filter 72A and a second power filter 72B. The first power filter 72A and the second power filter 72B are arranged symmetrically with respect to the second center line O2. The first power filter 72A and the second power filter 72B each include a capacitor and a coil.

The first surface of the power board 52 includes a first power terminal connection portion 73A and a second power terminal connection portion 73B. The first power terminal connection portion 73A and the second power terminal connection portion 73B are arranged symmetrically with respect to the second center line O2. The first power terminal connection portion 73A is a portion of the power board 52 to which the power terminal and the ground terminal of the first power connector 53A are connected. The second power terminal connection portion 73B is a portion of the power board 52 to which the power terminal and the ground terminal of the second power connector 53B are connected.

The first surface of the power board 52 includes a first signal terminal connection portion 74A and a second signal terminal connection portion 74B. The first signal terminal connection portion 74A and the second signal terminal connection portion 74B are arranged symmetrically with respect to the second center line O2. The first signal terminal connection portion 74A is a portion of the power board 52 to which the signal terminal of the first signal connector 53C is connected. The second power supply signal connection portion 74B is a portion of the power board 52 to which the signal terminal of the second signal connector 5D is connected.

The first surface of the power board 52 includes a first power circuit 75A and a second power circuit 75B. The first power circuit 75A and the second power circuit 75B are arranged symmetrically with respect to the second center line O2. Each of the first power circuit 75A and the second power circuit 75B is a chip-type integrated circuit. The first power circuit 75A converts the voltage of an in-vehicle direct current power supply to a voltage suitable for the operation of a first electrical circuit including the first microcomputer 61A. The second power circuit 75B converts the voltage of the in-vehicle direct current power supply to, for example, a voltage suitable for the operation of a second electrical circuit including the second microcomputer 61B. The conversion includes a process of reducing the voltage of the in-vehicle direct current power supply.

As shown in FIG. 6, the second surface of the power board 52 includes a first inverter circuit 81A and a second inverter circuit 81B. The first inverter circuit 81A and the second inverter circuit 81B are arranged symmetrically with respect to the second center line O2. The first inverter circuit 81A and the second inverter circuit 81B each include a plurality of switching devices. The switching devices are FETs (Field Effect Transistors).

When each switching device of the first inverter circuit 81A performs a switching operation, the direct current power supplied from the direct current power supply is converted to three-phase alternating current power. The alternating current power generated by the first inverter circuit 81A is supplied to a first winding group of the motor 40 via a power supply path such as a busbar. When each switching device of the second inverter circuit 81B performs a switching operation, the direct current power supplied from the direct current power supply is converted to three-phase alternating current power. The alternating current power generated by the second inverter circuit 81B is supplied to a second winding group of the motor 40 via a power supply path such as a busbar.

The second surface of the power board 52 includes a first phase-open relay group 82A and a second phase-open relay group 82B. The first phase-open relay group 82A and the second phase-open relay group 82B are arranged symmetrically with respect to the second center line O2. The first phase-open relay group 82A opens and closes the power supply paths of the three phases between the first inverter circuit 81A and the first winding group of the motor 40. The second phase-open relay group 82b opens and closes the power supply paths of the three phases between the second inverter circuit 81B and the second winding group of the motor 40. The phase-open relays may be, for example, FETs.

The second surface of the power board 52 includes a first power relay 83A and a second power relay 83B. The first power relay 83A and the second power relay 83B are arranged symmetrically with respect to the second center line O2. The first power relay 83A opens and closes the power supply path between the in-vehicle direct current power supply and the first inverter circuit 81A. The second power relay 83B opens and closes the power supply path between the in-vehicle direct current power supply and the second inverter circuit 81B. The direct current power supply is, for example, a battery. The power relays may be, for example, FETs.

The second surface of the power board 52 includes a first pre-driver 84A and a second pre-driver 84B. The first pre-driver 84A and the second pre-driver 84B are arranged symmetrically with respect to the second center line O2. The first pre-driver 84A generates a drive signal for the first inverter circuit 81A based on a command from the first microcomputer 61A. The second pre-driver 84B generates a drive signal for the second inverter circuit 81B based on a command from the second microcomputer 61B.

The second surface of the power board 52 includes a third inter-board connector 85A and a fourth inter-board connector 85B. The third inter-board connector 85A and the fourth inter-board connector 85B are arranged symmetrically with respect to the second center line O2. The third inter-board connector 85A is disposed at a position corresponding to the first inter-board connector 62A when the motor device 31 is assembled. The fourth inter-board connector 85B is disposed at a position corresponding to the second inter-board connector 62B when the motor device 31 is assembled.

The second surface of the power board 52 includes a rotation angle sensor 86. The rotation angle sensor 86 is disposed near the center of the second surface. The rotation angle sensor 86 is located on the second center line O2. The rotation angle sensor 86 is a magnetic sensor. The magnetic sensor is, for example, an MR sensor (Magneto Resistive Sensor). The rotation angle sensor 86 detects the rotation angle of the motor 40.

The first microcomputer 61A generates a command for the first pre-driver 84A based on the rotation angle of the motor 40 detected through the rotation angle sensor 86. The second microcomputer 61B generates a command for the second pre-driver 84B based on the rotation angle of the motor 40 detected through the rotation angle sensor 86.

### <Assembled State of Motor Device 31>

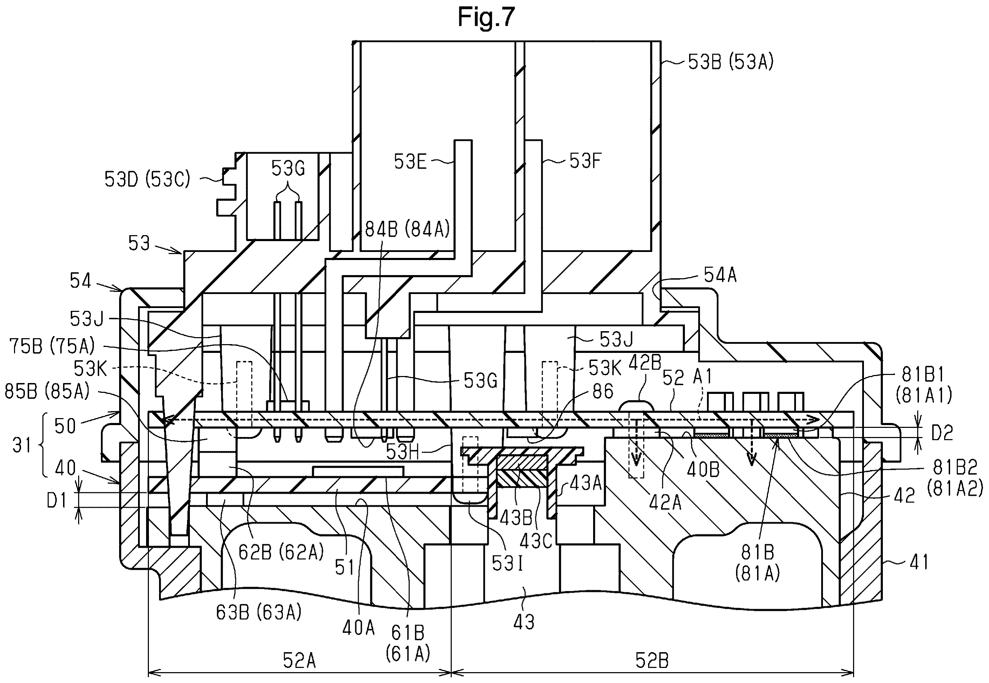

Next, the assembled state of the motor device 31 will be described. As shown in FIG. 7, the motor 40 includes a motor case 41 and a lid 42. An end of the motor case 41 is open in the axial direction. The end is the end of the motor case 41 on which the control device 50 is mounted. The lid 42 is fitted into the opening of the motor case 41 to close the opening. The lid 42 serves as an axial end wall of the motor case 41. The motor case 41 and the lid 42 are each made of metal. The metal is, for example, iron or an aluminum alloy.

The motor 40 includes an output shaft 43. The output shaft 43 is rotatably supported relative to the inner peripheral surface of the motor case 41. An end of the output shaft 43 passes through the lid 42 in the axial direction without contacting the lid 42. The end is the end of the output shaft 43 that is closer to the control device 50. A magnet 43B is fixed to the end of the output shaft 43 by a holder 43A. A spacer 43C is interposed between the end of the output shaft 43 and the magnet 43B. The holder 43A and the spacer 43C are each made of a non-magnetic material such as synthetic resin.

The control board 51 is housed inside the board housing portion 40A. The opposite end of the second ground connection member 63B from the control board 51 is in contact with the inner end wall of the board housing portion 40A. The second ground connection member 63B is maintained in a slightly compressed state in a direction perpendicular to the control board 51. Although not shown in the figure, the opposite end of the first ground connection member 63A from the control board 51 is also maintained in contact with the inner end wall of the board housing portion 40A. The first ground connection member 63A is maintained in a slightly compressed state in a direction perpendicular to the control board 51.

The power board 52 is supported by the lid 42 so as to cover the control board 51. The rotation angle sensor 86 faces the magnet 43B in the axial direction with the holder 43A interposed therebetween. The fourth inter-board connector 85B is connected to the second inter-board connector 62B. Although not shown in the figure, the third inter-board connector 85A is kept connected to the first inter-board connector 62A.

The second power connector 53B includes a power terminal 53E and a ground terminal 53F. The power terminal 53E and the ground terminal 53F each have a first end and a second end. The first ends are located inward of the peripheral wall of the second power connector 53B. The second ends pass through the power board 52 in a direction perpendicular to the power board 52. The second ends are connected to the power board 52 by soldering. Although not shown in the figure, the first power connector 53A also includes a power terminal 53E and a ground terminal 53F.

The second signal connector 53D includes a plurality of signal terminals 53G. Each signal terminal 53G has a first end and a second end. The first ends are located inward of the peripheral wall of the second signal connector 53D. The second ends pass through the power board 52 in a direction perpendicular to the power board 52. The second ends are connected to the power board 52 by soldering. Although not shown in the figure, the first signal connector 53C also includes a plurality of signal terminals 53G.

The power board 52 is connected to a positive terminal of the direct current power supply via the power terminal 53E. The power board 52 is connected to a negative terminal of the direct current power supply via the ground terminal 53F. Direct current power from the direct current power supply is supplied to the power board 52 via the power terminal 53E and the ground terminal 53F. Direct current power is supplied to the control board 51 via the first inter-board connector 62A and the third inter-board connector 85A and via the second inter-board connector 62B and the fourth inter-board connector 85B.

The power board 52 is connected to the vehicle control device via the signal terminals 53G. The power board 52 can send and receive signals to and from the vehicle control device via the signal terminals 53G. The control board 52 can send and receive signals to and from the vehicle control device via the first inter-board connector 62A and the third inter-board connector 85A and via the second inter-board connector 62B and the fourth inter-board connector 85B.

### <Heat Dissipation Structure of Motor Device 31>

Next, a heat dissipation structure of the motor device 31 will be described. As shown in FIG. 7, the control board 51 is fixed to the connector assembly 53. The connector assembly 53 includes a plurality of first support pillars 53H. Only one first support pillar 53H is shown in FIG. 7. The first support pillars 53H are provided on the opposite end of the connector assembly 53 from the power connectors (53A, 53B). The first support pillars 53H extend toward the lid 42. The control board 51 is fixed to the distal ends of the first support pillars 53H by screws 53I. The distal ends are the ends of the first support pillars 53H that are closer to the lid 42.

The power board 52 is fixed to the connector assembly 53. The connector assembly 53 includes a plurality of second support pillars 53J. The second support pillars 53J are provided on the opposite end of the connector assembly 53 from the power connectors (53A, 53B). The second support pillars 53J extend toward the lid 42. The length by which the second support pillars 53J protrude beyond the connector assembly 53 is shorter than the length by which the first support pillars 53H protrude beyond the connector assembly 53. The power board 52 is fixed to the distal ends of the second support pillars 53J by screws 53K. The distal ends are the ends of the second support pillars 53J that are closer to the lid 42.

The power board 52 is also fixed to the lid 42. The lid 42 includes a plurality of support portions 42A. Only one support portion 42A is shown in FIG. 7. The support portions 42A are provided on an axially outer end face of the lid 42. The power board 52 is fixed to the distal ends of the support portions 42A by screws 42B. The distal ends are the ends of the support portions 42A that are farther from the axially outer end face of the lid 42.

The lid 42 includes the board housing portion 40A and a heat dissipation portion 40B. The board housing portion 40A and the heat dissipation portion 40B are provided at an axial end of the lid 42. The end is an axially outer end of the lid 42. The board housing portion 40A and the heat dissipation portion 40B are adjacent to each other in a direction perpendicular to the axial direction. A step is provided between the board housing portion 40A and the heat dissipation portion 40B. That is, the axial position of an end wall surface of the board housing portion 40A and the axial position of an end wall surface of the heat dissipation portion 40A are different from each other. The end wall surface of the board housing portion 40A is farther in the axial direction from the end wall of the cover 54 than the end wall surface of the heat dissipation portion 40B. In other words, the end wall surface of the board housing portion 40A is located further axially inward in the motor 40 than the end wall surface of the heat dissipation portion 40B. The end wall surface of the board housing portion 40A is a first surface of the lid 42. The end wall surface of the heat dissipation portion 40B is a second surface of the lid 42. The heat dissipation portion 40B is a portion of the lid 42 that exchanges heat with the power board 52.

The end wall surface of the board housing portion 40A faces the control board 51 in the axial direction. A first clearance D1 is provided between the end wall surface of the board housing portion 40A and the control board 51. The power board 52 includes a first portion 52A and a second portion 52B. The first portion 52A is a portion of the power board 52 that faces the control board 51. The second portion 52B is a portion of the power board 52 that faces the end wall surface of the heat dissipation portion 40B. That is, the second portion 52B does not overlap the control board 51 in the axial direction. A second clearance D2 is provided between the second portion 52B and the end wall surface of the heat dissipation portion 40B. The second clearance D2 is smaller than the first clearance D1.

The thermal resistance between the second portion 52B of the power board 52 and the heat dissipation portion 40B is smaller than the thermal resistance between the control board 51 and the end wall surface of the board housing portion 40A. Moreover, part of the power board 52 is in contact with the lid 42. Therefore, the thermal resistance of a heat dissipation path between the power board 52 and the lid 42 is smaller than the thermal resistance of a heat dissipation path between the control board 51 and the lid 42. Thermal resistance quantifies how difficult it is for heat to transfer. The higher the thermal resistance, the more difficult it is for heat to transfer. The lower the thermal resistance, the easier it is for heat to transfer.

The thermal resistance between the control board 51 and the lid 42 and the thermal resistance between the second portion 52B of the power board 52 and the lid 42 each include the thermal resistance due to thermal radiation. Radiant heat attenuates in proportion to the square of the distance between a heat source and an object. Radiant heat attenuates to 1/4 of the original value when the distance is doubled, and to 1/9 of the original value when the distance is tripled. The symbol "/" represents division. Therefore, the heat generated by the second portion 52B of the power board 52 is more easily transferred to the lid 42 than the heat generated by the control board 51.

The power board 52 includes heat-generating elements. The heat-generating elements are electronic components that generate heat upon energization. The heat-generating elements include high heat-generating elements. The high heat-generating elements include, for example, the first power circuit 75A, the second power circuit 75B, the first pre-driver 84A, and the second pre-driver 84B. The high heat-generating elements also include, for example, a switching device 81A1 of the first inverter circuit 81A and a switching device 81B1 of the second inverter circuit 81B. The switching device 81B1 is one of the electronic components that generates a particularly large amount of heat, even among the high heat-generating elements. The amount of heat generated by the first power circuit 75A, the second power circuit 75B, the first pre-driver 84A, and the second pre-driver 84B is less than the amount of heat generated by the first inverter circuit 81A and the second inverter circuit 81B.

The first power circuit 75A, the second power circuit 75B, the first pre-driver 84A, and the second pre-driver 84B are provided in, for example, the first portion 52A of the power board 52. Only the second power circuit 75B and the second pre-driver 84B are shown in FIG. 7. The switching devices 81A1, 81B1 are provided in, for example, the second portion 52B of the power board 52. The opposite surfaces of the switching devices 81A1, 81B1 from the second surface of the power board 52 are in contact with the heat dissipation portion 40B of the lid 42 with respective heat dissipation materials 81A2, 81B2 interposed therebetween. Only the switching device 81B1 is shown in FIG. 7.

The heat dissipation materials 81A2, 81B2 are, for example, heat dissipation grease. Heat dissipation grease is highly thermally conductive. Gaps caused by minute irregularities between each switching device 81A1, 81B1 and the heat dissipation portion 40B are filled by applying the thermal grease between each switching device 81A1, 81B1 and the heat dissipation portion 40B. This facilitates thermal conduction between each switching device 81A1, 81B1 and the heat dissipation portion 40B.

The control board 51 includes heat-generating elements. The heat-generating elements include low heat-generating elements. The low heat-generating elements include, for example, the first microcomputer 61A and the second microcomputer 61B. The amount of heat generated by a low heat-generating element is less than the amount of heat generated by a high heat-generating element. The high heat-generating elements are, for example, the first power circuit 75A, the second power circuit 75B, the first pre-driver 84A, the second pre-driver 84B, and the switching devices 81A1, 81B1.

As indicated by dashed arrows in FIG. 7, the heat generated by the high heat-generating elements of the power board 52 is released via a heat dissipation path A1. The heat dissipation path A1 is a heat transfer path between each high heat-generating element of the power board 52 and the lid 42. The heat dissipation path A1 includes the power board 52, a contact portion between the power board 52 and the lid 42, and a noncontact portion between the power board 52 and the lid 42.

Part of the heat is transferred to the lid 42 by thermal conduction through the power board 52 and the contact portion between the power board 52 and the lid 42. The heat generated by the switching devices 81A1, 81B1 is efficiently transferred to the lid 42 via the heat dissipation materials 81A2, 81B2. Part of the heat is transferred directly to the lid 42 by radiation. The heat transferred to the lid 42 is dissipated to the outside via the motor case 41. Part of the heat is also transferred to the atmosphere by convection.

The control board 51 is not in direct contact with the lid 42. Therefore, the heat dissipation performance of the control board 51 is lower than the heat dissipation performance of the power board 52. However, the control board 51 does not include any high heat-generating elements. The high heat-generating elements are provided on the power board 52 that is a separate board from the control board 51. The first microcomputer 61A and the second microcomputer 61B are therefore less susceptible to the heat from the surroundings. Accordingly, it is possible to keep the temperatures of the first microcomputer 61A and the second microcomputer 61B at or below a specified heat-resistant temperature. The heat generated by the first microcomputer 61A and the second microcomputer 61B is transferred to the atmosphere or the lid 42 by, for example, convection or radiation.

### <Effects of Embodiment>

The present embodiment has the following effects.
(1) The motor 40 includes the motor case 41 and the lid 42 attached to the axial end of the motor case 41. The control board 51 includes the low heat-generating elements. The control board 51 is disposed so as to face part of the lid 42 in the axial direction of the motor 40. The power board 52 includes the high heat-generating elements that generate more heat than the low heat-generating elements. The power board 52 is disposed on the opposite side of the control board 51 from the lid 42 in the axial direction of the motor 40. In other words, the control board 51 is disposed between the lid 42 and the power board 52 in the axial direction of the motor 40. The power board 52 includes the first portion 52A facing the control board 51 and the second portion 52B facing the lid 42. The thermal resistance between the second portion 52B of the power board 52 and the lid 42 is smaller than the thermal resistance between the control board 51 and the lid 42.

With this configuration, the low heat-generating elements and the high heat-generating elements are provided on separate circuit boards. Therefore, heat from the high heat-generating elements is less likely to be transferred to the control board 51 and thus to the low heat-generating elements. This reduces a temperature increase of the low heat-generating elements. It is therefore possible to eliminate a configuration for dissipating the heat generated by the low heat-generating elements. For example, the end wall surface of the board housing portion 40A does not have to be in contact with the control board 51, or a heat dissipation material does not have to be interposed between the end wall surface of the board housing portion 40A and the control board 51.

The heat generated by the high heat-generating elements is efficiently transferred to the lid 42 via the power board 52. This is due to the configuration that makes the thermal resistance between the second portion 52B of the power board 52 and the lid 42 smaller. When the thermal resistance between the second portion 52B of the power board 52 and the lid 42 is smaller than, for example, the thermal resistance between the control board 51 that does not need a configuration for heat dissipation and the lid 42, sufficient heat dissipation can be ensured for the heat generated by the high heat-generating elements. Therefore, a separate heat sink does not have to be provided at the end of the motor 40 to ensure heat dissipation. Since a heat sink is not provided, the size of the motor device 31, particularly the axial size thereof, can be reduced accordingly. Since a heat sink is not provided, the weight of the motor device 31 can also be reduced accordingly.

(2) The axial distance D2 between the second portion 52B of the power board 52 and the lid 42 is shorter than the axial distance D1 between the control board 51 and the lid 42. In this configuration, since the axial distance D2 between the second portion 52B of the power board 52 and the lid 42 is shorter than the axial distance D1 between the control board 51 and the lid 42, the thermal resistance between the second portion 52B of the power board 52 and the lid 42 can be made smaller than the thermal resistance between the control board 51 and the lid 42.

(3) The lid 42 includes the board housing portion 40A and the heat dissipation portion 40B. The end wall surface of the board housing portion 40A is located further axially inward in the motor 40 than the end wall surface of the heat dissipation portion 40B. The end wall surface of the board housing portion 40A is the surface of the lid 42 that faces the control board 51. The end wall surface of the heat dissipation portion 40B is the surface of the lid 42 that faces the second portion 52B of the power board 52. In this configuration, since the end wall surface of the board housing portion 40A is located further axially inward in the motor 40 than the end wall surface of the heat dissipation portion 40B, the volume of the lid 42 can be reduced accordingly. In other words, the axial thickness of the portion of the lid 42 that faces the control board 51 can be reduced. Since the volume of the lid 42 is reduced, the weight of the motor device 31 can be reduced accordingly.

(4) The motor device 31 includes the connector assembly 53 made of synthetic resin. The connector assembly 53 is disposed at a position farther from the lid 42 than the power board 52 in the axial direction of the motor 40. In other words, the connector assembly 53 is disposed on the opposite side of the power board 52 from the lid 42 in the axial direction of the motor 40. The connector assembly 53 holds a plurality of terminals for supplying electric power or signals to the control board 51 and the power board 52. The terminals include the power terminal 53E, the ground terminal 53F, and the signal terminals 53G. The control board 51 is fixed to the connector assembly 53. The power board 52 is fixed to both the connector assembly 53 and the lid 42. With this configuration, the heat generated by the high heat-generating elements is transferred to the lid 42 via the power board 52. Since the control board 51 is not fixed to the lid 42, the heat transferred to the lid 42 is less likely to be transferred from the lid 42 to the control board 51. This reduces a temperature increase of the control board 51.

(5) The control board 51 and the power board 52 send and receive electric power and signals to and from each other via the inter-board connectors (62A, 85A, 62B, 85B). The power board 52 includes the power circuits (75A, 75B). Each power circuit converts the voltage of the in-vehicle direct current power supply to a voltage suitable for the operation of the electrical circuit including the microcomputer (61A, 61B) provided on the control board 51. Only the voltage converted by the power circuit is supplied to the control board 51 via the inter-board connectors. The voltage converted by the power circuit is lower than the voltage of the in-vehicle direct current power supply. Therefore, heat generation by the control board 51 can be reduced compared to a case where, for example, the voltage from the in-vehicle direct current power supply is supplied to the control board 51.

(6) The high heat-generating elements include the switching devices 81A1, 81B1, the pre-drivers (84A, 84B), and the power circuits (75A, 75B). The switching devices 81A1, 81B1 are disposed on the second portion 52B of the power board 52. The pre-drivers (84A, 84B) and the power circuits (75A, 75B) are disposed on the first portion 52A of the power board 52.

The first portion 52A of the power board 52 is a portion of the power board 52 that faces the control board 51. Accordingly, there is a risk that heat may be transferred from the first portion 52A of the power board 52 to the control board 51 by, for example, radiation. In this regard, the above configuration can reduce the amount of heat that is transferred from the first portion 52A of the power board 52 to the control board 51, compared to a case where the inverter circuits (81A, 81B) are provided on the first portion 52A of the power board 52. This is because the amount of heat generated by the pre-drivers (84A, 84B) and the power circuits (75A, 75B) is less than the amount of heat generated by the inverter circuits (81A, 81B).

(7) The switching devices 81A1, 81B are provided on the surface of the power board 52 that faces the lid 42. The switching devices 81A1, 81B are in contact with the lid 42 with the respective heat dissipation materials 81A2, 81B2 interposed therebetween. With this configuration, the heat generated by the switching devices 81A1, 81B is efficiently transferred to the lid 42 via the respective heat dissipation materials 81A2, 81B2.

(8) The motor 40 includes two control systems and two power supply systems. The number of electronic components on the control board 51 and the power board 52 is twice as many compared to a case where the motor 40 includes a single control system and a single power supply system. Accordingly, the mounting density of the electronic components on the circuit boards is increased. Therefore, for example, when the high heat-generating elements and the low heat-generating elements are provided on the same circuit board, the temperatures of the plurality of electronic components tend to increase due to heat being transferred between the electronic components.

For example, it is assumed that the microcomputers (61A, 61B) that are low heat-generating elements, and the pre-drivers (81A, 81B) and the power circuits (75A, 75B) that are high heat-generating elements, are provided on the same circuit board. In this case, there is a concern that the temperatures of not only the high heat-generating elements but also the microcomputers (61A, 61B) that are low heat-generating elements may increase. Therefore, the motor device 31 needs to be provided with a configuration for reducing a temperature increase of the microcomputers (61A, 61B).

In the present embodiment, the microcomputers (61A, 61B) are provided on a different circuit board from the pre-drivers (81A, 81B) and the power circuits (75A, 75B). This reduces heat transfer between the microcomputers (61A, 61B) and the pre-drivers (81A, 81B) and heat transfer between the microcomputers (61A, 61B) and the power circuits (75A, 75B). Therefore, the temperature increase of the microcomputers (61A, 61B) can be reduced. The motor device 31 does not have to be provided with a separate configuration for reducing a temperature increase of the microcomputers (61A, 61B). The present embodiment is suitable for the motor device 31 that includes a plurality of control systems and a plurality of power supply systems.

### <Other Embodiments>

The present embodiment may be modified as follows.
- The heat dissipation materials 81A2, 81B2 may be omitted. In this case, a clearance is provided between each switching device 81A1, 81B1 and the heat dissipation portion 40B. The clearance is very small. Therefore, the heat generated by the switching devices 81A1, 81B1 is efficiently transferred to the heat dissipation portion 40B by, for example, radiation.
   - Instead of fixing the power board 52 to the connector assembly 53 and the lid 42, the power board 52 may be fixed to, for example, the connector assembly 53 and the motor case 41. In this case, the motor case 41 is provided with, for example, a support portion for supporting the power board 52. This configuration can also ensure the heat dissipation performance of the power board 52.
   - The motor 40 may include a single winding group. The motor 40 may include a single control system and a single power supply system. In this case, the connector assembly 53 may have a configuration in which either the first power connector 53A and the first signal connector 53C or the second power connector 53B and the second signal connector 53D are omitted.

## Claims

1. A motor device comprising:
a motor including a motor case made of metal, and an end wall made of metal and attached to an axial end of the motor case;
a first circuit board including a low heat-generating element, and disposed so as to face a portion of the end wall in an axial direction of the motor, the first circuit board being configured to control power supply to the motor; and
a second circuit board including a high heat-generating element configured to generate more heat than the low heat-generating element, the second circuit board being disposed on an opposite side of the first circuit board from the end wall in the axial direction of the motor, and the second circuit board being configured to supply electric power to the motor under control of the first circuit board, wherein:
the second circuit board includes a first portion facing the first circuit board, and a second portion facing the end wall; and
thermal resistance between the second portion and the end wall is smaller than thermal resistance between the first circuit board and the end wall.

2. The motor device according to claim 1, wherein an axial distance between the second portion and the end wall is shorter than an axial distance between the first circuit board and the end wall.

3. The motor device according to claim 1 or 2, wherein:
the end wall includes a first surface facing the first circuit board, and a second surface facing the second portion of the second circuit board; and
the first surface is located further axially inward in the motor than the second surface.

4. The motor device according to claim 1 or 2, further comprising a connector assembly made of synthetic resin and disposed at a position farther from the end wall than the second circuit board in the axial direction of the motor, the connector assembly holding a plurality of terminals configured to supply electric power or a signal to the first circuit board and the second circuit board, wherein:
the first circuit board is fixed to the connector assembly; and
the second circuit board is fixed to the connector assembly and to either the end wall or the motor case.

5. The motor device according to claim 1 or 2, further comprising an inter-board connector that connects the first circuit board and the second circuit board, the inter-board connector being configured to transfer electric power and a signal between the first circuit board and the second circuit board, wherein:
the high heat-generating element includes a power circuit configured to convert a voltage supplied from an external power supply to a voltage appropriate for operation of an electrical circuit including the low heat-generating element provided on the first circuit board; and
the inter-board connector is configured to supply only the voltage converted by the power circuit to the first circuit board.

6. The motor device according to claim 1 or 2, wherein:
the high heat-generating element includes
a switching device that constitutes an inverter circuit configured to supply electric power to the motor,
a pre-driver configured to drive the inverter circuit based on a command from the first circuit board, and
a power circuit configured to convert a voltage supplied from an external power supply to a voltage appropriate for operation of an electrical circuit including the low heat-generating element provided on the first circuit board;
the switching device is disposed on the second portion of the second circuit board; and
the pre-driver and the power circuit are disposed on the first portion of the second circuit board.

7. The motor device according to claim 6, wherein the switching device is provided on a surface of the second circuit board that faces the end wall, and the switching device is in contact with the end wall with a heat dissipation material interposed between the switching device and the end wall.
